# EUROPÄISCHE PATENTANMELDUNG

(11) **EP 1 693 602 A1**
(43) Veröffentlichungstag der Anmeldung: **23.08.2006**
(21) Anmeldenummer: 06002996.4
(22) Anmeldetag: 15.02.2006
(51) Int. Cl.: F16H 57/12, F16H 57/08, F16H 1/28, F16F 1/32

(54) **Getriebe mit vorgespanntem Sicherungselement**

(30) Priorität: 22.02.2005 DE 102005026617
(71) Anmelder: ZF FRIEDRICHSHAFEN AG, 88038 Friedrichshafen (DE)
(72) Erfinder: Fritz, Walter, 88097 Eriskirch (DE)

(57) **Zusammenfassung**

Ein Getriebe (1) mit mindestens einem, zwischen einer Eingangswelle (8) und einer Ausgangswelle angeordneten Planetenradsatz (4) weist Sicherungselemente (7) auf, welche, durch die Geometrie bedingt, eine Gegenkraft ausüben, wodurch in das Getriebe (1) eingeleitete ungleiche Drehmoment, Axialkräfte und Axialspiele ausgeglichen werden.

## Beschreibung

Die Erfindung betrifft ein Getriebe nach der im Oberbegriff von Anspruch 1 näher definierten Art.

Bei Nutzkraftfahrzeugen werden häufig manuell geschaltete 6-Gang-Getriebe in Gruppenbauweise eingesetzt. Diese umfassen im wesentlichen eine Antriebswelle, neben der koaxial eine Hauptwelle angeordnet ist, die gleichzeitig mit dem Abtrieb verbunden ist. Parallel zur Hauptwelle ist eine Vorgelegewelle angeordnet, die von der Antriebswelle aus über ein Konstantradpaar mit einer konstanten Drehzahl angetrieben wird. Ferner sind auf der Haupt- und Vorgelegewelle die einzelnen Zahnräder der Gangradpaare angeordnet. Derartige Getriebe weisen unter anderem durch die Länge der Wellen und das Gesamtgewicht des Getriebes hohe Schaltkräfte auf. Durch zusätzliche Synchronisierungen im Getriebe wird die Anzahl und die Belastung der Bauteile weiter erhöht. Außerdem entsteht bei langen Wellen eine starke Wellendurchbiegung und, damit verbunden, ein starker Verschleiß des Getriebes.

Eine weitere Form eines Getriebes ist ein Split-Getriebe mit einer sogenannten Split-Gruppe, die zur Verdichtung der Gangfolge des Hauptgetriebes dient. Bei einem solchen Mehrgruppen-Getriebe mit Haupt- und Split-Gruppe multipliziert sich die Anzahl der Gänge der Hauptgruppe um die Anzahl der Gangstufen der Split-Gruppe. In der Regel weist eine Split-Gruppe zwei Gangradpaare auf, wodurch der Hauptgruppe zwei unterschiedliche Antriebs- bzw. Abtriebskonstanten zur Übertragung der Drehzahl auf die Abtriebswelle zur Verfügung gestellt werden können.

Weiterhin bekannt sind Getriebe, vorzugsweise zur Verwendung in Fahrzeugen, mit einem Hauptgetriebe und einem mit dem Hauptgetriebe verbindbaren Zweiggetriebe-Abschnitt mit einer Einrichtung zum Absorbieren axialer und/oder radialer Kräfte, welche auf die tragenden Wellen wirken, wobei die Sekundärwellen des Zweiggetriebe-Abschnittes und des Hauptgetriebes einzeln in ihren entsprechenden Gehäusen gelagert und drehfest miteinander verbunden sind.

Ein derartiges Getriebe ist aus der DE-OS 2 344 797 bekannt.

Ferner sind Getriebe, insbesondere für Kraftfahrzeuge, aus dem Stand der Technik bekannt, die Planetenradsätze aufweisen, die mittels Reibungs- bzw. Schaltelementen, wie etwa Kupplungen und Bremsen, geschaltet werden und üblicherweise mit einem, einer Schlupfwirkung unterliegenden und wahlweise mit einer Überbrückungskupplung versehenen Anfahrelement, wie etwa einem hydrodynamischen Drehmomentwandler oder einer Strömungskupplung, verbunden sind.

Ein derartiges Getriebe ist in der EP 0 434 525 A1 beschrieben.

Es umfaßt im wesentlichen eine Antriebswelle und eine Abtriebswelle, die parallel zueinander angeordnet sind, einen konzentrisch zur Abtriebswelle angeordneten Doppel-Planetenradsatz und Schaltelemente in Form von Kupplungen und Bremsen, deren wahlweise Sperrung jeweils paarweise die verschiedenen Gangübersetzungen zwischen der Antriebswelle und der Abtriebswelle bestimmen.

Die Kraftübertragung zwischen zwei mit unterschiedlicher Drehzahl rotierenden Wellen bzw. feststehenden Elementen werden in Getrieben mittels verschiedener Bauteile, wie Axiallager und Anlaufscheiben oder Lamellen und Endscheiben, ermöglicht. Diese Bauteile sind während der Kraftübertragung durch hohe Axialkräfte belastet.

Weiterhin werden die vom Fahrzeugmotor eingeleiteten Drehmomente, die gewissen Ungleichmäßigkeiten unterliegen, voll auf die Getriebeeingangsstufe übertragen, die jedoch nicht von den Axiallagern oder Lamellen selbst aufgenommen werden können, da sie selbst keine axiale Lagerung aufweisen. Die Aufnahme der Axialkräfte und Drehmomente übernehmen die Anlauf- bzw. Endscheiben. Diese nehmen die Axialkräfte auf und leiten diese in die relativ kleine Anlagefläche eines axialen Sicherungselements ein. In der als einfacher Kreisring bekannten Form, wie er in der DIN 988 dargestellt ist, hat das Sicherungselement den Nachteil, dass durch den Versatz zwischen der eingeleiteten Axialkraft und der Reaktionskraft eine starke Kippneigung entsteht. Die in unbelastetem Zustand eben an das Axiallager anliegende, kreisringförmige Anlagefläche des Sicherungselements wird unter Last durch das Kippen uneben und kann eine kegelförmige Fläche einnehmen. Dadurch wird die Axialkraft nicht mehr gleichmäßig über die gesamte zur Verfügung stehende Fläche der Anlaufscheibe eingeleitet. Die entstehenden lokalen Pressungen zwischen den Axiallagern oder Lamellen und der Anlauf- oder Endscheibe steigen an und führen häufig zu frühzeitigem Materialversagen. Da sich Sicherungselemente ab einer bestimmten Grenzdrehzahl öffnen können, werden sie häufig zusätzlich radial gesichert. Dies kann beispielsweise durch mehrere Stifte erfolgen. Diese Lösung weist jedoch den Nachteil einer umständlichen Montage und hohe Fertigungskosten auf. Zusätzlich benötigen alle aus dem Stand der Technik bekannten Lösungen ein geringes axiales Spiel bei der Montage, um diese prozeßsicher montieren zu können. Dies kann bei einer Lastübernahme zu einem Drehmomenteinbruch führen. Weiterhin kann dieses axiale Spiel dazu führen, dass die Anlageflächen schneller verschleißen.

Der vorliegenden Erfindung liegt die Aufgabe zugrunde, ein Getriebe darzustellen, welche auftretende Axialkräfte und Axialspiel ausgleichen kann und eine axiale Fixierung in unbelastetem und axial belastetem Zustand auf einfache Weise realisiert.

Ferner ist es Aufgabe der vorliegenden Erfindung, Relativbewegungen zwischen den Bauteilen zu vermindern, die beispielsweise durch Drehunförmigkeiten bei drehmomentübertragenden Welle-Nabe-Verbindungen mit Spiel auftreten können.

Die der Erfindung zugrunde liegende Aufgabe wird durch ein, auch die kennzeichnenden Merkmale des Hauptanspruch aufweisendes, gattungsgemäßes Getriebe gelöst.

Vor das zu fixierende Bauteil wird ein Sicherungselement plaziert, welches durch seine Geometrie eine Gegenkraft ausüben kann, wodurch die in das Getriebe eingeleiteten ungleichen Drehmomente, Axialkräfte und Axialspiele ausgeglichen werden. Dazu weist das Sicherungselement Wölbungen auf, die in Anzahl und Höhe der Wölbungen sowie in Vorspannweg und/oder Querschnitt variiert werden können. Dieses Sicherungselement wird bei der Montage durch Zusammendrücken der Wellen vorgespannt. Ist die Vorspannkraft höher als die im Betrieb auftretende Axialkraft, ist das Bauteil sicher axial fixiert. Im axial unbelasteten Zustand des Bauteils verhindert die Vorspannkraft die Relativbewegung gegenüber den benachbarten Bauteilen. Schließt beispielsweise eine Kupplung in einem Automatgetriebe, entsteht durch die Drehmomentübertragung eine Axialkraft, die durch eine Anlaufscheibe aufgenommen werden muß.

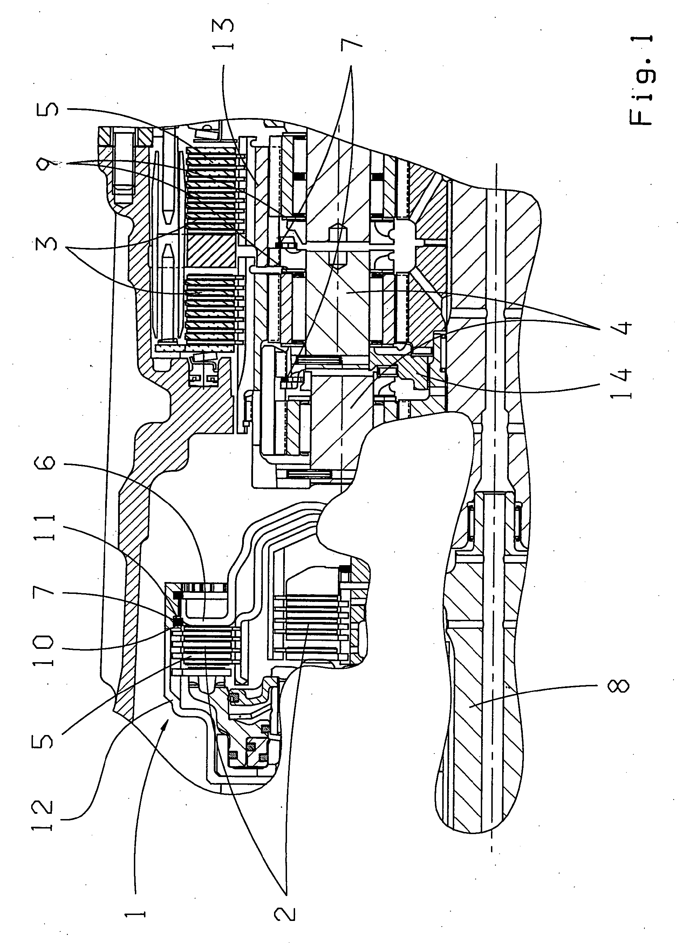

Ein Ausführungsbeispiel der Erfindung ist in der Zeichnung dargestellt und wird im folgenden näher beschrieben.

Die einzige Figur zeigt einen Ausschnitt eines erfindungsgemäßen Getriebes 1, mit Kupplungen 2, Bremsen 3 und Planetenradsätzen 4. Die Kupplungen 2 und Bremsen 3 weisen Lamellen 5 auf, die durch ein Stützelement 6 in Form eines Mitnehmers und ein Sicherungselement 7 fixiert sind. Ein von einer Eingangswelle 8 eingeleitetes Drehmoment führt zur Entstehung einer Axialkraft. Die Axialkraft wird großflächig in ein Stützelement 6 eingeleitet und versetzt von einer relativ kleinen Anlagefläche 10 des Sicherungselements 7 aufgenommen. Das Sicherungselement 7 sitzt in einer Nut 11 im Gehäuse 12.

Durch ein nicht dargestelltes, schrägverzahntes Sonnenrad wird eine Axialkraft erzeugt, die auf das Sicherungselement 7 wirkt. Ist diese Axialkraft kleiner als die axiale Vorspannkraft des Sicherungselements 7, wird das Stützelement 6 mit einer Differenzkraft belastet. Dadurch ist sichergestellt, dass es beim Schalten einer Kupplung 2 zu keinem Drehmomenteinbruch durch ein axiales Ausweichen des Stützelements 6 kommen kann. Vom Motor eingeleitete Ungleichförmigkeiten des Drehmoments wirken direkt auf einen Planetenträger 14. Der Planetenträger 14 wird hierdurch in Umfangsrichtung verzögert und/oder beschleunigt. Über eine nicht dargestellte Mitnahmeverzahnung soll Drehmoment vom Planetenträger 14 auf das Hohlrad 13 übertragen werden. Durch die Massenträgheit des Hohlrads kann dieses den Beschleunigungen des Planetenträgers 14 nicht folgen. Dadurch bewegen sich Hohlrad und Planetenträger 14 in Umfangsrichtung relativ zueinander. Hierdurch kommt es zu einem Verschleiß der Kontaktflächen zwischen Hohlrad und Planetenträger 14. Durch das Sicherungselement 7 wird das Hohlrad 13 über ein weiteres Sicherungselement 7 an den Planetenträger 14 gedrückt. Aufgrund der Reibung kann das Hohlrad den in Umfangsrichtung auftretenden Beschleunigungen des. Planetenträgers 14 folgen. Es entstehen weder Relativbewegungen noch Verschleiß zwischen den Bauteilen.

### Bezugszeichen

- 1: Planetenrad-Wechselgetriebe
- 2: Kupplung.
- 3: Bremse
- 4: Planetenradatz
- 5: Lamelle
- 6: Stützelement
- 7: Sicherungselement
- 8: Eingangswelle
- 9: Anlauf-/Endscheibe
- 10: Anlagefläche
- 11: Nut
- 12: Gehäuse
- 13: Hohlrad
- 14: Planetenträger

## Patentansprüche

1. Getriebe (1) mit mindestens einem, zwischen einer Eingangswelle (8) und einer Ausgangswelle angeordneten Planetenradsatz (4) mit Stützelementen (6) und Sicherungselementen (7), **dadurch gekennzeich- net,** dass das Sicherungselement (7) an einer Anlagefläche (10) anliegt und durch seine Geometrie eine Gegenkraft ausübt, wodurch in das Getriebe (1) eingeleitete, ungleiche Drehmomente, Axialkräfte und Axialspiele reduziert bzw. ausgeglichen werden.

2. Getriebe (1) nach Anspruch 1, **dadurch gekennzeichnet , dass** das Sicherungselement (7) gewölbt, aufgebogen und/oder geschlitzt ist.

3. Getriebe (1) nach Anspruch 1, **dadurch gekennzeichnet , dass** das Sicherungselement (7) vorgespannt ist.

4. Getriebe (1) nach Anspruch 3, **dadurch gekennzeichnet , dass** die Vorspannkraft durch die Anzahl an Wölbungen, die Höhe der Wölbungen, den Vorspannweg und/oder den Querschnitt des Sicherungselements (7) variiert wird.

5. Verwendung eines Getriebes (1) nach den Ansprüchen 1 bis 4 in einem Automatgetriebe, welches mehrere, wahlweise betätigbare, den Planetenradsätzen (4) zugeordnete Kupplungen (2), Bremsen (3) und Lamellen (5) aufweist.
